(19) Europäisches Patentamt / European Patent Office / Office européen des brevets

(11) **EP 1 681 085 B1**

(12) **FASCICULE DE BREVET EUROPEEN**

(45) Date de publication et mention de la délivrance du brevet:
**22.07.2009 Bulletin 2009/30**

(51) Int Cl.:
***B01D 46/52*** *(2006.01)* ***B60H 3/06*** *(2006.01)*

(21) Numéro de dépôt: **05111249.8**

(22) Date de dépôt: **24.11.2005**

(54) **Dispositif de filtration d'air à paroi de canalisation rigide et procédé de fabrication d'un tel dispositif**

Luftfilteranordnung mit steifer Kanalwand und Verfahren zur Herstellung einer solchen Anordnung

Air filtering assembly with rigid channel wall and process for manufacturing said assembly.

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.12.2004 FR 0453257**

(43) Date de publication de la demande:
**19.07.2006 Bulletin 2006/29**

(73) Titulaire: **Valeo Matériaux de Friction**
**87020 Limoges (FR)**

(72) Inventeurs:
• **Silva, M. Manuel**
  **14680, Gouvix (FR)**
• **Bidot, M. Johann**
  **14770, Le Plessis Grimault (FR)**

(74) Mandataire: **Lemaire, Marc et al**
**Valeo Transmissions**
**Service Propriété Industrielle**
**34, rue Saint-André**
**93012 Bobigny Cedex (FR)**

(56) Documents cités:
**EP-A- 0 721 792** **EP-A- 0 891 801**
**WO-A-20/04087298** **DE-A1- 4 227 744**

## Description

La présente invention concerne un dispositif de filtration d'air à paroi de canalisation rigide et un procédé de fabrication d'un tel dispositif.

Elle s'applique en particulier à la filtration d'air circulant dans un véhicule automobile, notamment d'air climatisé ou non destiné à circuler dans l'habitacle du véhicule.

Dans ce qui suit, en considérant qu'un élément a une épaisseur $e$ et une masse volumique $Mv$, on qualifiera de "souple" un élément dont le produit de rigidité $P$ vérifie la relation suivante, dite relation de souplesse :

$$P = e \times Mv \leq 0.3 kg/m^2 ,$$

et de "rigide" un élément dont le produit de rigidité $P$ vérifie la relation suivante, dite relation de rigidité :

$$P = e \times Mv \geq 0.5 kg/m^2 .$$

On connaît déjà, dans l'état de la technique, notamment d'après FR 2 849 787, un dispositif de filtration d'air, du type comportant un dispositif de filtration d'air, du type comportant un média filtrant relié à un support comprenant au moins une paroi plane de canalisation d'air ayant une épaisseur $e_1$, une masse volumique $Mv_1$ et un produit de rigidité $P_1 = e_1 \times Mv_1$ vérifiant la relation suivante, dite relation de rigidité :

$$P_1 \geq 0.5 kg/m^2 ;$$

la paroi de canalisation rigide étant munie d'une face interne reliée au média filtrant, et d'une face externe.

Habituellement, le dispositif de filtration d'air est logé dans un boîtier agencé dans le corps du véhicule automobile.

La paroi de canalisation d'air, relativement rigide, contribue à la rigidification du dispositif de filtration d'air, tandis que l'élément d'étanchéité, relativement souple, permet d'éviter les fuites d'air entre le dispositif de filtration et le boîtier de logement.

Il est connu de fabriquer un dispositif de filtration d'air du type précité notamment conformément aux étapes suivantes.

La paroi de canalisation est reliée au média filtrant par soudage thermique de la face interne de cette paroi et d'une surface de jonction complémentaire du média filtrant. Cette opération de soudage se fait sans apport de matière.

Or, lors de cette opération de soudage thermique, la paroi de canalisation perd sa forme initiale plane.

En effet, sous l'effet de la chaleur, les extrémités de la paroi de canalisation se déforment.

L'opération de soudage est donc généralement suivie d'une opération de chauffage de la face externe de la paroi de canalisation destinée à redresser les extrémités de cette paroi pour sensiblement rendre à la paroi de canalisation sa forme initiale plane, comme décrit dans la demande de brevet français FR 2 849 787.

Dans certains cas, on relie un élément d'étanchéité souple à la paroi de canalisation par collage, par exemple par une colle de type polyoléfine. Un élément d'étanchéité souple ayant une dimension perpendiculaire à la paroi plane de canalisation d'air appelée épaisseur $e_2$, une masse volumique $Mv_2$ et un produit de rigidité $P_2 = e_2 \times Mv_2$ vérifie la relation suivante, dite relation de souplesse :

$$P_2 \leq 0.3 kg/m^2 .$$

Au cours de cette opération de collage, qui se fait donc avec apport de matière, tout d'abord, on applique la colle sur la face externe de la paroi de canalisation et sur une surface de jonction complémentaire de l'élément d'étanchéité en général en polyuréthane, puis, on presse l'une contre l'autre la face externe et la surface de jonction complémentaire. La surface de jonction peut aussi comporter un joint préencollé.

Or, la colle n'est généralement pas recyclable. Son utilisation limite donc les possibilités de recyclage du dispositif de filtration. De plus, la colle présente dans certains cas une tenue à la chaleur insatisfaisante, ce qui peut limiter l'efficacité de l'étanchéité entre le dispositif de filtration et son boîtier de logement.

L'invention a notamment pour but de s'affranchir des problèmes liés à l'utilisation de la colle.

A cet effet, l'invention a pour objet un dispositif de filtration d'air conforme à la revendication 1.

L'élément d'étanchéité étant relié à la paroi de canalisation d'air par une soudure thermique plutôt que par de la colle, on facilite le recyclage du dispositif de filtration d'air. Par ailleurs, la soudure thermique permet généralement une meilleure cohésion de l'élément d'étanchéité avec la paroi de canalisation et une meilleure tenue à la chaleur que la colle. En particulier, la soudure thermique ne se dégrade pas aux températures élevées susceptibles d'être atteintes par un véhicule automobile en saison chaude.

De plus, on a pu observer que, grâce à l'invention, la soudure thermique de l'élément d'étanchéité sur la paroi de canalisation ne provoque pas de déformation indésirable de la paroi de canalisation rigide mais au contraire corrige de façon satisfaisante les déformations engendrées par le soudage thermique du média filtrant sur la face interne de la paroi de canalisation.

Un dispositif de filtration d'air selon l'invention peut en outre comporter l'une ou plusieurs des caractéristiques suivantes :

- le produit de rigidité $P_1$ de la paroi de canalisation rigide est supérieur ou égal à $1 kg/m^2$, voire supérieur ou égal à $2 kg/m^2$ ;
- le produit de rigidité $P_2$ de l'élément d'étanchéité souple est inférieur ou égal à $0{,}2 kg/m^2$, et/ou supérieur ou égal à $0{,}05 kg/m^2$ ;
- en appelant hauteur d'un élément la dimension de cet élément parallèle à la direction d'un flux d'air destiné à traverser le média filtrant, la hauteur minimale de la paroi de canalisation d'air est supérieure à la hauteur maximale de l'élément d'étanchéité;
- l'épaisseur $e_2$ de l'élément d'étanchéité est supérieure à l'épaisseur $e_1$ de la paroi de canalisation rigide ;
- le média filtrant est relié à la paroi de canalisation rigide par une soudure thermique sans apport de matière ;
- le média filtrant est plié en accordéon, la paroi de canalisation étant dite transversale et s'étendant parallèlement aux plis du média filtrant ;
- le média filtrant est plié en accordéon, la paroi de canalisation étant dite longitudinale et s'étendant perpendiculairement aux plis du média filtrant ;
- le support comprend des première et seconde parois de canalisation rigides sensiblement parallèles, entre lesquelles s'étend le média filtrant, et des premier et second éléments d'étanchéité vérifiant la relation de souplesse, s'étendant parallèlement aux première et seconde parois de canalisation et reliés respectivement à ces première et seconde parois de canalisation par une soudure thermique sans apport de matière ;
- la paroi de canalisation comporte au moins deux parties de hauteurs différentes, l'élément d'étanchéité présentant une hauteur évoluant de façon sensiblement identique à celle de la paroi de canalisation ; et
- le média filtrant, la paroi de canalisation et l'élément d'étanchéité sont tous fabriqués en polymère thermoplastique, de préférence en un même polymère thermoplastique.
- Le polymère thermoplastique est choisi parmi un polypropylène, un polyéthylène, un polyamide, un polyester et un polycarbonate.
- Tous les composants sont fabriqués en un même polymère thermoplastique.

On notera par ailleurs que, grâce à l'invention, il est possible d'optimiser le procédé de fabrication du dispositif de filtration d'air.

Ainsi, l'invention a également pour objet un procédé de fabrication d'un dispositif de filtration d'air comprenant un média filtrant relié à un support comprenant au moins une paroi plane de canalisation d'air ayant une épaisseur $e_1$, une masse volumique $Mv_1$ et un produit de rigidité $P_1 = e_1 \times Mv_1$ vérifiant la relation suivante, dite relation de rigidité :

$$P_1 \geq 0.5 kg/m^2 \; ;$$

la paroi de canalisation rigide étant munie d'une face interne reliée au média filtrant, et d'une face externe, dans lequel :

- on relie le média filtrant à la paroi de canalisation, de forme initialement plane, par une opération de soudage thermique, sans apport de matière, de la face interne de la paroi de canalisation avec une surface de jonction complémentaire du média filtrant, puis
- on réalise une opération de chauffage de la face externe de la paroi de canalisation de façon à redresser des extrémités de cette paroi déformées par l'opération de soudage thermique précédente pour sensiblement rendre à la paroi de canalisation sa forme initiale plane,

**caractérisé en ce que**

- cette opération de chauffage est réalisée de façon à souder thermiquement un élément d'étanchéité souple, ayant une dimension perpendiculaire à la paroi plane de canalisation d'air appelée épaisseur $e_2$, une masse volumique $Mv_2$ et un produit de rigidité $P_2 = e_2 \times Mv_2$ vérifiant la relation suivante, dite relation de souplesse $P_2 \leq 0.3 kg/m^2$, avec la face externe de la paroi de canalisation.

Ainsi, grâce au procédé de l'invention, une même opération de chauffage permet à la fois de redresser la paroi de canalisation et de relier l'élément d'étanchéité à cette paroi de canalisation. De plus, il n'y a pas d'apport de matière. L'invention permet donc de réduire le coût et le temps de fabrication du dispositif de filtration d'air.

De préférence, le procédé selon l'invention comporte une ou plusieurs des caractéristiques suivantes :

- l'opération de soudage thermique de la face interne de la paroi de canalisation est une opération choisie parmi une opération de soudage miroir et une opération de soudage par un rayonnement infra-rouge ; et
- l'opération de chauffage de la face externe de la paroi de canalisation fait partie d'une opération de soudage thermique choisie parmi une opération de soudage miroir, une opération de soudage par un rayonnement infra-rouge et une opération de soudage par ultra-sons.

L'invention sera mieux comprise à la lecture de la description qui va suivre, donnée uniquement à titre d'exemple et faite en se référant aux dessins annexés dans lesquels :

- la figure 1 est une vue en perspective d'un dispositif de filtration d'air selon un premier mode de réalisation de l'invention ;
- la figure 2 est une vue similaire à la figure 1 d'un dispositif de filtration d'air selon un second mode de réalisation de l'invention.

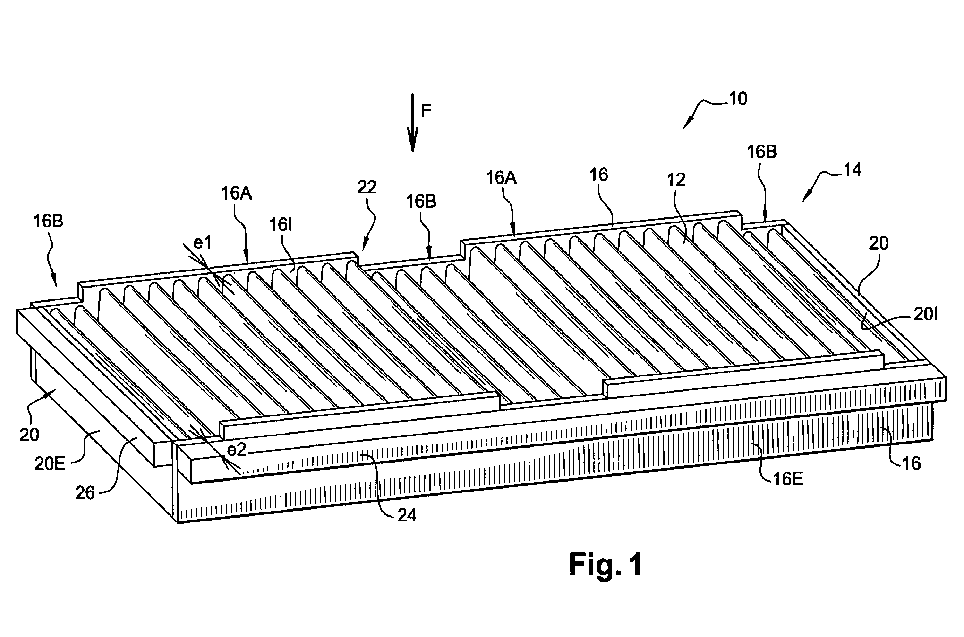

On a représenté sur la figure 1 un dispositif de filtration d'air selon un premier mode de réalisation de l'invention, désigné par la référence générale 10.

Le dispositif de filtration 10 est destiné par exemple à être agencé dans une installation de circulation d'air dans un véhicule automobile, afin notamment d'approvisionner un habitacle de ce véhicule en air climatisé ou non. A cet effet, le dispositif de filtration 10 est habituellement logé dans un boîtier (non représenté) agencé dans le corps du véhicule automobile.

Le dispositif de filtration 10 comporte un média filtrant 12 de type classique, plié en accordéon et relié à un support 14. La direction et le sens d'écoulement de l'air à travers ce média filtrant 12 sont représentés par une flèche F sur les figures.

Le média filtrant 12 est constitué par exemple d'un matériau multicouche porté, le cas échéant, par des grilles non représentées, et comporte avantageusement des moyens de filtration de particules et/ou de gaz.

Afin de faciliter le recyclage du dispositif 10, le média filtrant 12 est de préférence entièrement fabriqué en matériau synthétique thermoplastique, plus particulièrement, dans l'exemple décrit, en polypropylène.

Le support 14 comporte deux parois planes 16 sensiblement parallèles, dites parois longitudinales de canalisation d'air, entre lesquelles le média filtrant 12 s'étend. Ces parois longitudinales 16 s'étendent sensiblement perpendiculairement aux plis du média filtrant 12. Elles sont munies chacune d'une face interne 16I reliée à une surface de jonction complémentaire (non représentée) du média filtrant 12 sans apport de matière, par une soudure thermique.

Le support 14 comporte en outre deux parois planes 20, sensiblement parallèles, dites parois transversales de canalisation d'air. Ces parois transversales 20 s'étendent sensiblement parallèlement aux plis du média filtrant 12. Elles sont munies chacune d'une face interne 20I reliée à une surface de jonction complémentaire (non représentée) du média filtrant 12 sans apport de matière, par une soudure thermique.

Les parois longitudinales 16 et transversales 20 de canalisation d'air sont destinées à canaliser, vers le média filtrant 12, l'air traversant le dispositif de filtration 10.

Dans ce qui suit, on appellera épaisseur d'un élément sa dimension moyenne perpendiculaire à la direction générale F d'écoulement d'air. Par ailleurs, on appellera hauteur d'un élément sa dimension parallèle à la direction générale F d'écoulement d'air.

Les parois de canalisation 16, 20 sont relativement rigides de façon que le produit $P_1 = e_1 \times Mv_1$, dit produit de rigidité, vérifie la relation suivante, dite relation de rigidité :

$$P_1 \geq 0.5\,kg/m^2\,,$$

$e_1$ étant l'épaisseur de la paroi de canalisation 16, 20 mesurée perpendiculairement à sa face interne 16I, 20I, et
$Mv_1$ étant la masse volumique de la paroi de canalisation 16, 20.

De préférence, $P_1$ est supérieur à $1\,kg/m^2$, voire supérieur à $2\,kg/m^2$.

Des parois de canalisation 16, 20 ont été réalisées en polypropylène ayant les caractéristiques suivantes :

Ex 1 : $e_1 = 2,5\,mm$, $Mv_1 = 910\,kg/m^3$, $P_1 = 2.3\,kg/m^2$
Ex 2 : $e_1 = 5\,mm$, $Mv_1 = 140\,kg/m^3$, $P_2 = 0,7\,kg/m^2$
Ex 3 : $e_1 = 1,5\,mm$, $Mv_1 = 910\,kg/m^3$, $P_2 = 1,4\,kg/m^2$

Les parois de canalisation longitudinales 16 et transversales 20 sont généralement fabriquées dans un matériau synthétique thermoplastique, de préférence en polypropylène.

Dans l'exemple représenté, le dispositif de filtration 10 est muni de moyens 22 formant détrompeur destinés à coopérer avec des moyens complémentaires ménagés sur le boîtier de logement.

Les moyens 22 formant détrompeur sont agencés sur les parois longitudinales 16 de canalisations.

A cet effet, les parois longitudinales 16 comportent des parties de hauteurs différentes, à savoir deux parties hautes 16A et trois parties basses 16B.

On notera que la hauteur des plis du média filtrant 12 est variable, ce média filtrant 12 comportant des plis de faible hauteur correspondant sensiblement à la hauteur des parties basses 16B et des plis de grande hauteur correspondant sensiblement à la hauteur des parties hautes 16A.

Afin d'assurer l'étanchéité entre le dispositif 10 de filtration d'air et le boîtier de logement, un élément d'étanchéité longitudinal 24 est fixé sur chaque paroi longitudinale 16 et un élément d'étanchéité transversal 26 est fixé sur chaque paroi transversale 26. Les éléments d'étanchéité 24, 26 ont par exemple des sections rectangulaires. Chaque paroi de canalisation 16, 20 est munie d'une face externe 16E, 20E reliée à l'élément d'étanchéité correspondant 24, 26, sans apport de matière, par une soudure thermique.

Les éléments d'étanchéité 24, 26 sont relativement souples de façon que le produit de rigidité $P_2 = e_2 \times Mv_2$ vérifie la relation de souplesse :

$$P_2 \leq 0.3 kg/m^2,$$

$e_2$ étant l'épaisseur d'un élément d'étanchéité 24, 26 correspondant à la dimension de cet élément 24, 26 perpendiculaire à la paroi de canalisation 16, 20 qui le porte, et

$Mv_2$ étant la masse volumique de l'élément d'étanchéité 24, 26.

Les éléments d'étanchéité 24, 26 sont fabriqués dans un matériau synthétique thermoplastique, de préférence en polypropylène.

Des éléments d'étanchéité 24, 26 ont été réalisés en polypropylène ayant les caractéristiques suivantes :

Ex 4 : $e_{2i}$ = 2$mm$, $Mv_2$ = 3$kg/m^3$, $P_2$ =0,06$kg/m^2$
Ex 5 : $e_2$ = 2$mm$, $Mv_2$ =100$kg/m^3$, $P_2$ =0,2$kg/m^2$
Ex 6 : $e_2$ = 3$mm$, $Mv_2$ =60$kg/m^3$, $P_2$ =0,18$kg/m^2$
Ex 7: $e_2$ = 5$mm$, $Mv_2$ = 40$kg/m^3$, $P_2$ = 0,2$kg/m^2$

Des dispositifs de filtration ont été réalisés en associant les parois de canalisation selon les exemples Ex 1 à Ex 3 aux éléments d'étanchéité selon les exemples Ex 4 à Ex 7.

Ainsi, le dispositif de filtration d'air est avantageusement fabriqué entièrement en polypropylène et donc facilement recyclable.

Dans le premier mode de réalisation décrit en référence à la figure 1, chaque élément d'étanchéité 24, 26 a une hauteur inférieure à la hauteur minimale de la paroi longitudinale 16, 20 correspondante. De manière plus générale, la hauteur maximale de chaque élément d'étanchéité 24, 26 est inférieure à la hauteur minimale de la paroi de canalisation d'air 16, 20 correspondante.

Par ailleurs, l'épaisseur $e_2$ de chaque élément d'étanchéité 24, 26 est généralement supérieure à l'épaisseur $e_1$ de la paroi de canalisation d'air 16, 20 correspondante.

On décrira ci-dessous un procédé selon l'invention pour la fabrication du dispositif de filtration 10.

Tout d'abord, on relie le média filtrant 12 à chaque paroi de canalisation 16, 20, de forme initialement plane, par une opération classique de soudage thermique qui est habituellement une opération de soudage miroir ou une opération de soudage par un rayonnement infra-rouge ou une opération de soudure par ultra-sons. Au cours du soudage thermique, la face interne 16I, 20I de chaque paroi de canalisation 16, 20 est soudée avec la surface de jonction complémentaire du média filtrant 12.

Bien entendu, les matériaux synthétiques constituant le média filtrant 12 et les parois 16, 20 sont choisis de façon à autoriser leur soudage thermique.

On observe que, lors du soudage thermique, les parois de canalisation 16, 20 tendent à se déformer, notamment à leurs extrémités.

Ensuite, on fixe les éléments d'étanchéité 24, 26 sur les parois de canalisation 16, 20. Pour cela, on relie les éléments d'étanchéité 24, 26 à la face externe 16E, 20E des parois de canalisation 16, 20 par une opération classique de soudage thermique qui est habituellement une opération de soudage miroir ou une opération de soudage par un rayonnement infra-rouge ou une opération de soudure par ultra-sons.

Afin de réaliser lesdites opérations de soudage, on se reportera utilement aux conditions opératoires décrites dans la demande de brevet français FR 2 843 787.

Cette opération de soudage comporte une opération de chauffage de la face externe 16E, 20E des parois de canalisation 16, 20. Or, on observe que cette opération de chauffage de la face externe 16E, 20E des parois 16, 20 permet de corriger de façon satisfaisante les déformations engendrées par le soudage thermique du média filtrant 12 sur les paroi de canalisation 16, 20.

On réalise donc simultanément le soudage des éléments d'étanchéité 24, 26 sur les parois de canalisation 16, 20 et le redressage des extrémités déformées de ces parois 16, 20.

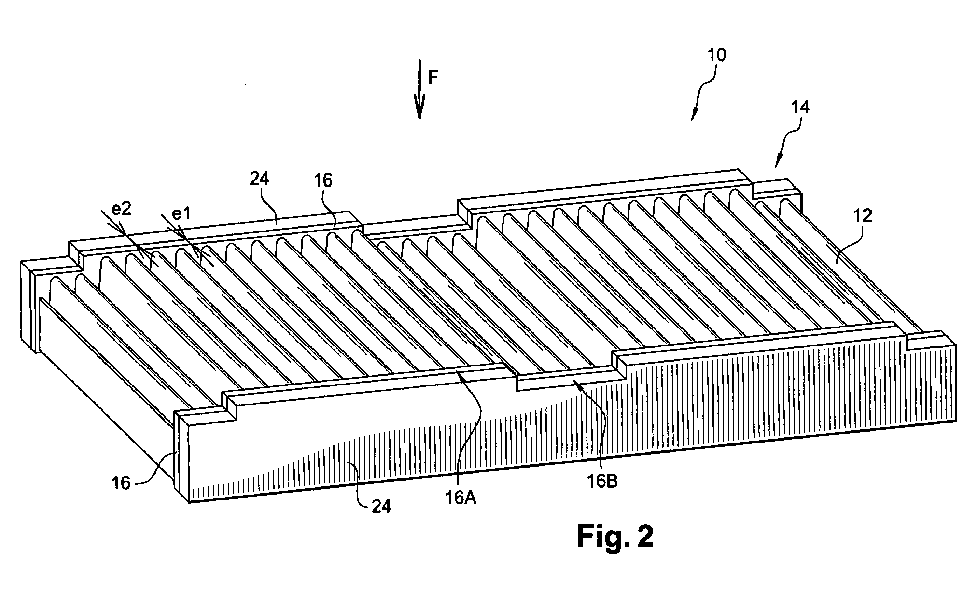

Sur la figure 2, les éléments analogues à ceux de la figure 1 sont désignés par des références identiques.

Dans le second mode de réalisation, décrit en référence à cette figure 2, le dispositif de filtration 10 ne comporte pas de parois de canalisation transversales. Le dispositif de filtration 10 comporte des parois de canalisation longitudinales 16 sur lesquelles des éléments d'étanchéité longitudinaux 24 sont soudés thermiquement.

La hauteur de chaque élément d'étanchéité longitudinal 24 évolue de façon sensiblement identique à celle de la paroi de canalisation 16 auquel il est relié.

De préférence, les hauteurs des éléments d'étanchéité 24 et des parois de canalisation 16 coïncident entre elles sur toute la longueur de ces éléments. Ainsi, chaque élément d'étanchéité 24 forme avec la paroi longitudinale de canalisation 16 correspondante une paroi bi-couche.

On notera que l'invention n'est pas limitée aux modes de réalisation précédemment décrits. En effet, le dispositif de filtration 10 pourrait notamment être fabriqué avec n'importe quel matériau habituel. Par exemple, le média filtrant 12 pourrait comporter du charbon actif en grain plutôt que d'être entièrement fabriqué en polypropylène.

**Revendications**

1. Dispositif de filtration d'air (10), du type comportant un média filtrant (12) relié à un support (14) comprenant au moins une paroi plane (16, 20) de canalisation d'air ayant une épaisseur $e_1$, une masse volumique $Mv_1$ et un produit de rigidité $P_1$ = $e_1 \times Mv_1$

vérifiant la relation suivante, dite relation de rigidité :

$$P_1 \geq 0.5 kg/m^2 \; ;$$

la paroi de canalisation rigide (16, 20) étant munie d'une face interne (161, 201) reliée au média filtrant par une soudure thermique sans apport de matière, et d'une face externe (16E, 20E), **caractérisé en ce qu'**un élément d'étanchéité souple (24, 26) ayant une dimension perpendiculaire à la paroi plane de canalisation rigide appelée épaisseur $e_2$, une masse volumique $Mv_2$ et un produit de rigidité $P_2 = e_2 \times Mv_2$ vérifiant la relation suivante, dite relation de souplesse :

$$P_2 \leq 0.3 kg/m^2$$

est relié à la face externe (16E, 20E) de la paroi de canalisation rigide (16, 20) par une soudure thermique sans apport dé matière.

2. Dispositif de filtration d'air (10) selon la revendication 1, **caractérisé en ce que** le produit de rigidité $P_1$ de la paroi de canalisation rigide (16, 20) est supérieur à $1 kg/m^2$, voire supérieur à $2 kg/m^2$.

3. Dispositif de filtration d'air (10) selon la revendication 1 ou 2, **caractérisé en ce que,** en appelant hauteur d'un élément la dimension de cet élément parallèle à la direction d'un flux d'air (F) destiné à traverser le média filtrant (12), la hauteur minimale de la paroi de canalisation rigide (16, 20) est supérieure à la hauteur maximale de l'élément d'étanchéité (24, 26).

4. Dispositif de filtration d'air (10) selon l'une quelconque des revendications 1 à 3, **caractérisé en ce que** l'épaisseur $e_2$ de l'élément d'étanchéité (24, 26) est supérieure à l'épaisseur $e_1$ de la paroi de canalisation rigide (16, 20).

5. Dispositif de filtration d'air (10) selon l'une quelconque des revendications précédentes, **caractérisé en ce que** le média filtrat (12) est relié à la paroi de canalisation rigide (16, 20) par une soudure thermique sans apport de matière.

6. Dispositif de filtration d'air (10) selon l'une quelconque des revendications 1 à 5, **caractérisé en ce que** le média filtrant (12) est plié en accordéon, la paroi de canalisation (20) étant dite transversale et s'étendant parallèlement aux plis du média filtrant (12).

7. Dispositif de filtration d'air (10) selon l'une quelconque des revendications 1 à 5, **caractérisé en ce que** le média filtrant (12) est plié en accordéon, la paroi de canalisation (16) étant dite longitudinale et s'étendant perpendiculairement aux plis du média filtrant (12).

8. Dispositif de filtration d'air (10) selon la revendication 7, **caractérisé en ce que** le support (14) comprend des première et seconde parois (16) de canalisation longitudinales rigides sensiblement parallèles, entre lesquelles s'étend le média filtrant (12), et des premier et second éléments d'étanchéité (24) vérifiant la relation de souplesse, s'étendant parallèlement aux première et seconde parois de canalisation (16) et reliés respectivement à ces première et seconde parois de canalisation (16) par une soudure thermique sans apport de matière.

9. Dispositif de filtration d'air (10) selon l'une quelconque des revendications précédentes, **caractérisé en ce que** la paroi de canalisation (16) comporte au moins deux parties (16A, 16B) de hauteurs différentes, l'élément d'étanchéité (24) présentant une hauteur évoluant de façon sensiblement identique à celle de la paroi de canalisation (16).

10. Dispositif de filtration d'air (10) selon l'une quelconque des revendications précédentes, **caractérisé en ce que** le média filtrant (12), la paroi de canalisation (16, 20) et l'élément d'étanchéité (24, 26) sont tous fabriqués en matière thermoplastique, de préférence en polypropylène.

11. Procédé de fabrication d'un dispositif de filtration d'air (10) comportant un média filtrant (12) relié à un support (14) comprenant au moins une paroi plane (16, 20) de canalisation d'air ayant une épaisseur $e_1$, une masse volumique $Mv_1$ et un produit de rigidité $P_1 = e_1 \times Mv_1$ vérifiant la relation suivante, dite relation de rigidité :

$$P_1 \geq 0.5 kg/m^2 \; ;$$

la paroi de canalisation rigide (16, 20) étant munie d'une face interne (16I, 20I) reliée au média filtrant, et d'une face externe (16E, 20E)
dans lequel :

- on relie le média filtrant (12) à la paroi de canalisation (16, 20), de forme initialement plane, par une opération de soudage thermique, sans apport de matière, de la face interne (16I, 20I) de la paroi de canalisation (16, 20) avec une surface de jonction complémentaire du média filtrant (12), puis
- on réalise une opération de chauffage de la face externe (16E, 20E) de la paroi de canalisation (16, 20) de façon à redresser des extrémités de cette paroi déformées par l'opération de soudage thermique précédente pour sensiblement rendre à la paroi de canalisation (16, 20) sa forme initiale plane,

**caractérisé en ce que** cette opération de chauffage est réalisée de façon à souder thermiquement un élément d'étanchéité souple (24, 26) ayant une dimension perpendiculaire à la paroi plane de canalisation rigide appelée épaisseur $e_2$, une masse volumique $Mv_2$ et un produit de ngidite $P_2 = e_2 \times Mv_2$ vérifiant la relation suivante, dite relation de souplesse :

$$P_2 \leq 0.3 kg/m^2$$

avec la face externe de la paroi de canalisation (16, 20).

12. Procédé de fabrication d'un dispositif de filtration d'air (10) selon la revendication 11, **caractérisé en ce que** l'opération de soudage thermique de la face interne (16I, 20I) de la paroi de canalisation (16, 20) est une opération choisie parmi une opération de soudage miroir et une opération de soudage par un rayonnement infra-rouge.

13. Procédé de fabrication d'un dispositif de filtration d'air (10) selon la revendication 11 ou 12, **caractérisé en ce que** l'opération de chauffage de la face externe (16E, 20E) de la paroi de canalisation fait partie d'une opération de soudage thermique choisie parmi une opération de soudage miroir et une opération de soudage par un rayonnement infra-rouge.

**Claims**

1. Air filtering device (10) of the type comprising a filtering medium (12) which is connected to a support (14), comprising at least one flat wall (16, 20) for channelling of air, with a thickness $e_1$, a density $Mv_1$ and a rigidity product $P_1 = e_1 \times Mv_1$, verifying the following ratio, known as the rigidity ratio:

$$P_1 \geq 0.5 \ kg/m^2;$$

the rigid channelling wall (16, 20) being provided with an inner surface (16I, 201) which is connected to the filtering medium by means of a thermal weld without added material, and an outer surface (16E, 20E), **characterised in that** a flexible sealing element (24, 26) with a dimension perpendicular to the rigid flat channelling wall, known as the thickness $e_2$, a density $Mv_2$ and a rigidity product $P_2 = e_2 \times Mv_2$, verifying the following ratio, known as the flexibility ratio:

$$P_2 \leq 0.3 \ kg/m^2$$

is connected to the outer surface (16E, 20E) of the rigid channelling wall (16, 20) by a thermal weld without added material.

2. Air filtering device (10) according to claim 1, **characterised in that** the rigidity product $P_1$ of the rigid channelling wall (16, 20) is greater than $1 kg/m^2$, or even greater than $2 kg/m^2$.

3. Air filtering device (10) according to claim 1 or claim 2, **characterised in that**, whilst calling "the height of an element" the dimension of this element parallel to the direction of a flow of air (F) which is designed to pass through the filtering medium (12), the minimum height of the rigid channelling wall (16, 20) is greater than the maximum height of the sealing element (24, 26).

4. Air filtering device (10) according to any one of claims 1 to 3, **characterised in that** the thickness $e_2$ of the sealing element (24, 26) is greater than the thickness $e_1$ of the rigid channelling wall (16, 20).

5. Air filtering device (10) according to any one of the preceding claims, **characterised in that** the filtering medium (12) is connected to the rigid channelling wall (16, 20) by a thermal weld without added material.

6. Air filtering device (10) according to any one of claims 1 to 5, **characterised in that** the filtering medium (12) is folded in the form of an accordion, the channelling wall (20) being said to be transverse and extending parallel to the folds of the filtering medium (12).

7. Air filtering device (10) according to any one of claims 1 to 5, **characterised in that** the filtering medium (12) is folded in the form of an accordion, the channelling wall (16) being said to be longitudinal and extending parallel to the folds of the filtering medium (12).

8. Air filtering device (10) according to claim 7, **characterised in that** the support (14) comprises first and second, substantially parallel rigid longitudinal channelling walls (16) between which the filtering medium (12) extends, and first and second sealing elements (24) which verify the ratio of flexibility, and extend parallel to the first and second channelling walls (16), and are connected respectively to first and second channelling walls (16) by a thermal weld without added material.

9. Air filtering device (10) according to any one of the preceding claims, **characterised in that** the channelling wall (16) comprises at least two parts (16A, 16B) with different heights, the sealing element (24) having a height which extends substantially identically to that of the channelling wall (16).

10. Air filtering device (10) according to any one of the preceding claims, **characterised in that** the filtering medium (12), the channelling wall (16, 20) and the sealing element (24, 26) are all made of thermoplastic material, and preferably polypropylene.

11. Method for production of an air filtering device (10) comprising a filtering medium (12) which is connected to a support (14) comprising at least one flat wall (16, 20) for channelling of air, with a thickness $e_1$, a density $Mv_1$ and a rigidity product $P_1 = e_1$ x $Mv_1$, verifying the following ratio, known as the rigidity ratio:
the rigid channelling wall (16, 20) being provided with an inner surface (16I, 201) which is connected to the filtering medium, and an outer surface (16E, 20E), wherein:

- the filtering medium (12) is connected to the channelling wall (16, 20), which has a form which is initially flat, by means of a thermal welding operation, without added material, of the inner surface (16I, 201) of the channelling wall (16, 20), to a complementary joining surface of the filtering medium (12), then
- an operation is carried out of heating of the outer surface (16E, 20E) of the channelling wall (16, 20), such as to straighten the ends of this wall which have been deformed by the preceding thermal welding operation, in order substantially to restore the channelling wall (16, 20) to its initial flat form,

**characterised in that** this heating operation is carried out in such a way as to weld thermally a flexible sealing element (24, 26) with a dimension perpendicular to the rigid flat channelling wall, known as the thickness $e_2$, a density $Mv_2$ and a rigidity product $P_2 = e_2$ x $Mv_2$, verifying the following ratio, known as the flexibility ratio:

$$P_2 \leq 0.3 \; kg/\,m^2$$

to the outer surface of the channelling wall (16, 20).

12. Method for production of an air filtering device (10) according to claim 11, **characterised in that** the operation of thermal welding of the inner surface (16I, 201) of the channelling wall (16, 20) is an operation selected from amongst a mirror welding operation and an operation of welding by means of infrared radiation.

13. Method for production of an air filtering device (10) according to claim 11 or claim 12, **characterised in that** the operation of heating the outer surface (16E, 20E) of the channelling wall forms part of a thermal welding operation which is selected from amongst a mirror welding operation and an operation of welding by means of infrared radiation.

**Patentansprüche**

1. Luftfiltervorrichtung (10) mit einem Filtermedium (12), das mit einer Halterung (14) verbunden ist, die wenigstens eine ebene Luftkanalisierungswand (16, 20) mit einer Dicke $e_1$, einer volumenbezogenen Masse $Mv_1$ und einem Steifigkeitsprodukt $P_1 = e_1$ x $Mv_1$ umfasst, für das die folgende als Steifigkeitsverhältnis bezeichnete Relation gilt:

$$P_1 \geq 0,5 \; kg/m^2,$$

wobei die starre Kanalisierungswand (16, 20) mit einer Innenfläche (16I, 20I), die durch eine Thermoschweißung ohne Zusatzwerkstoff mit dem Filtermedium verbunden ist, und mit einer Außenfläche (16E, 20E) versehen ist,
**dadurch gekennzeichnet, dass** ein biegsames Dichtungselement (24, 26) mit einer als Dicke $e_2$ bezeichneten Abmessung senkrecht zur starren ebenen Kanalisierungswand, einer volumenbezogenen Masse $Mv_2$ und einem Steifigkeitsprodukt $P_2 = e_2$ x $Mv_2$, für das die folgende als Biegsamkeitsverhältnis bezeichnete Relation gilt:

$$P_2 \leq 0,3 \; kg/m^2,$$

mit der Außenfläche (16E, 20E) der starren Kanalisierungswand (16, 20) durch eine Thermoschweißung ohne Zusatzwerkstoff verbunden ist.

2. Luftfiltervorrichtung (10) nach Anspruch 1, **dadurch gekennzeichnet, dass** das Steifigkeitsprodukt $P_1$ der starren Kanalisierungswand (16, 20) größer als $1 \; kg/m^2$, insbesondere größer als $2 \; kg/m^2$ ist.

3. Luftfiltervorrichtung (10) nach Anspruch 1 oder 2, **dadurch gekennzeichnet, dass,** wenn als Höhe eines Elements die Abmessung dieses Elements parallel zur Richtung eines Luftstroms (F) bezeichnet wird, der das Filtermedium (12) durchströmen soll, die minimale Höhe der starren Kanalisierungswand (16, 20) größer als die maximale Höhe des Dichtungselements (24, 26) ist.

4. Luftfiltervorrichtung (10) nach einem der Ansprüche 1 bis 3, **dadurrch gekennzeichnet, dass** die Dicke $e_2$ des Dichtungselements (24, 26) größer als die Dicke $e_1$ der starren Kanalisierungswand (16, 20) ist.

5. Luftfiltervorrichtung (10) nach einem der vorangehenden Ansprüche, **dadurch gekennzeichnet, dass** das Filtermedium (12) mit der starren Kanalisierungswand (16, 20) durch eine Thermoschweißung ohne Zusatzwerkstoff verbunden ist.

6. Luftfiltervorrichtung (10) nach einem der Ansprüche 1 bis 5, **dadurch gekennzeichnet, dass** das Filtermedium (12) zickzackförmig gefaltet ist, wobei die Kanalisierungswand (20) als Querwand bezeichnet wird und parallel zu den Falten des Filtermediums (12) verläuft.

7. Luftfiltervorrichtung (10) nach einem der Ansprüche 1 bis 5, **dadurch gekennzeichnet, dass** das Filtermedium (12) zickzackförmig gefaltet ist, wobei die Kanalisierungswand (16) als Längswand bezeichnet wird und senkrecht zu den Falten des Filtermediums (12) verläuft.

8. Luftfiltervorrichtung (10) nach Anspruch 7, **dadurch gekennzeichnet, dass** die Halterung (14) in etwa parallele erste und zweite starre Kanalisierungslängswände (16), zwischen denen sich das Filtermedium (12) erstreckt, und erste und zweite Dichtungselemente (24) umfasst, für die das Biegsamkeitsverhältnis gilt, die parallel zu den ersten und zweiten Kanalisierungswänden (16) verlaufen und mit diesen ersten und zweiten Kanalisierungswänden (16) durch eine Thermoschweißung ohne Zusatzwerkstoff verbunden sind.

9. Luftfiltervorrichtung (10) nach einem der vorangehenden Ansprüche, **dadurch gekennzeichnet, dass** die Kanalisierungswand (16) wenigstens zwei Teile (16A, 16B) mit unterschiedlichen Höhen umfasst, wobei das Dichtungselement (24) eine Höhe aufweist, die sich in etwa identisch mit der Höhe der Kanalisierungswand (16) verändert.

10. Luftfiltervorrichtung (10) nach einem der vorangehenden Ansprüche, **dadurch gekennzeichnet, dass** das Filtermedium (12), die Kanalisierungswand (16, 20) und das Dichtungselement (24, 26) alle aus Thermoplast, vorzugsweise aus Polypropylen, hergestellt sind.

11. Verfahren zur Herstellung einer Luftfiltervorrichtung (10) mit einem Filtermedium (12), das mit einer Halterung (14) verbunden ist, die wenigstens eine ebene Luftkanalisierungswand (16, 20) mit einer Dicke $e_1$, einer volumenbezogenen Masse $Mv_1$ und einem Steifigkeitsprodukt $P_1 = e_1 \times Mv_1$ umfasst, für das die folgende als Steifigkeitsverhältnis bezeichnete Relation gilt:

$$P_1 \geq 0,5 \ kg/m^2,$$

wobei die starre Kanalisierungswand (16, 20) mit einer Innenfläche (16I, 20I), die mit dem Filtermedium verbunden ist, und einer Außenfläche (16E, 20E) versehen ist,
wobei:

- das Filtermedium (12) mit der anfänglich eine ebene Form aufweisenden Kanalisierungswand (16, 20) durch einen Thermoschweißvorgang ohne Zusatzwerkstoff zum Verschweißen der Innenfläche (16I, 20I) der Kanalisierungswand (16, 20) mit einer komplementären Anschlussfläche des Filtermediums (12) verbunden wird, woraufhin
- ein Erhitzungsvorgang zum Erhitzen der Außenfläche (16E, 20E) der Kanalisierungswand (16, 20) durchgeführt wird, so dass durch den vorangehenden Thermoschweißvorgang verformte Enden dieser Wand wieder geradegerichtet werden, um die Kanalisierungswand (16, 20) wieder in etwa in ihre ebene Ausgangsform zu bringen,

**dadurch gekennzeichnet, dass** dieser Erhitzungsvorgang so erfolgt, dass ein biegsames Dichtungselement (24, 26) mit einer als Dicke $e_2$ bezeichneten Abmessung senkrecht zur starren ebenen Kanalisierungswand, einer volumenbezogenen Masse $Mv_2$ und einem Steifigkeitsprodukt $P_2 = e_2 \times Mv_2$, für das die folgende als Biegsamkeitsverhältnis bezeichnete Relation gilt:

$$P_2 \leq 0,3 \ kg/m^2,$$

mit der Außenfläche der Kanalisierungswand (16, 20) thermisch verschweißt wird.

12. Verfahren zur Herstellung einer Luftfiltervorrichtung (10) nach Anspruch 11, **dadurch gekennzeichnet, dass** es sich bei dem Thermoschweißvorgang zum Verschweißen der Innenfläche (16I, 20I) der Kanalisierungswand (16, 20) einen Vorgang handelt, der aus einem Spiegelschweißvorgang und einem Infrarotschweißvorgang ausgewählt wird.

13. Verfahren zur Herstellung einer Luftfiltervorrichtung (10) nach Anspruch 11 oder 12, **dadurch gekennzeichnet, dass** der Vorgang zur Erhitzung der Außenfläche (16E, 20E) der Kanalisierungswand zu einem Thermoschweißvorgang gehört, der aus einem Spiegelschweißvorgang und einem Infrarotschweißvorgang ausgewählt wird.

EP 1 681 085 B1

Fig.1

11

**Fig. 2**

EP 1 681 085 B1

EP 1 681 085 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2849787

- FR 2843787